# EUROPEAN PATENT APPLICATION

(11) **EP 4 659 629 A1**
(43) Date of publication of application: **10.12.2025**
(21) Application number: 23919387.3
(22) Date of filing: 25.10.2023
(51) Int. Cl.: A47C 27/10, A47C 27/08, C08L 23/28, C08L 23/22, C08L 23/16

(54) **INTELLIGENT PRESSURE-SENSITIVE ADJUSTABLE BEDDING AND USAGE METHOD THEREFOR**

(30) Priority: 30.01.2023 CN 202310064795
(71) Applicant: Li, Shi, Dongguan, Guangdong 523560 (CN)
(72) Inventor: Li, Shi, Dongguan, Guangdong 523560 (CN)
(74) Representative: Huang, Liwei
(86) International application number: PCT/CN2023/126514
(87) International publication number: WO 2024/159823

(57) **Abstract**

The present invention discloses an intelligent pressure-sensitive adjustable bedding and a method for using the same, belonging to the technical field of bedding. An intelligent pressure-sensitive adjustable bedding includes a main frame, a mattress and an air pump installed inside the main frame, wherein the mattress is provided with a first pressure-sensitive adjustment region and a second pressure-sensitive adjustment region, the first pressure-sensitive adjustment region is located in the middle of the mattress, and the second pressure-sensitive adjustment region is symmetrically distributed at head and tail ends of the mattress; first airbags are arranged in the first pressure-sensitive adjustment region, second airbags are arranged in the second pressure-sensitive adjustment region; both the first airbags and the second airbags are made of high-temperature-resistant materials, a first sensing portion is arranged around each first airbag, and a second sensing portion is arranged around each second airbag, and the first sensing portion and the second sensing portion are respectively connected to the air pump through electromagnetic valves. By adding modified chlorinated butyl rubber, the high-temperature resistance of the first airbag and the second airbag is improved, thereby facilitating frequent inflation and deflation. At the same time, the first airbags and the second airbags have good mechanical properties and are not prone to shape deformation.

## Description

The present invention claims the priority of the Chinese patent application filed with the Chinese Patent Office on January 30, 2023, with an application number of 202310064795.1 and entitled "Intelligent Pressure-Sensitive Adjustable Bedding and Usage Method Therefor", the contents of which are incorporated herein by reference in its entirety.

### TECHNICAL FIELD

The present invention relates to an intelligent pressure-sensitive adjustable bedding and a method for using the same, belonging to the technical field of bedding.

### BACKGROUND

Mattresses are daily necessities in people's lives. The comfort level of a mattress affects the living quality of people, and further affects their physical health. With the continuous improvement of living standards, the pursuit of a comfortable life has become increasingly strong. An airbag mattress is beneficial to human health, and inflatable airbags are used to adapt to the concave and convex shapes of the human body, thereby evenly supporting various positions of the human body, and helping to eliminate muscle fatigue and improve the quality of rest.

At present, the airbag in the mattress exhibits poor support performance and is prone to deformation after being used for a period of time. This is because when an air pump is started, the air is pressurized and the temperature rises. After the high-temperature air enters the airbag, the physical and chemical properties of the airbag itself will change, and the shape of the airbag will change, thereby causing a decline in the telescopic function, and making it difficult to use for a long time. Chinese patent CN104277450A discloses a TPU film for an inflatable airbag of a medical mattress, the TPU film includes the following components: 100 parts of TPU particles, 5-10 parts of modified nano-silica masterbatch, 5-10 parts of silicone masterbatch, and 0-10 parts of TPU color masterbatch. This makes the inflatable airbag of the mattress not easy to deform, resistant to high pressure, and capable of cyclic inflation and deflation. However, the inflatable airbag of the mattress still does not have high-temperature resistance, and still has difficulty in solving the technical problem that the shape of the airbag changes due to the entry of high-temperature air into the airbag.

### SUMMARY

To solve the above problem, an intelligent pressure-sensitive adjustable bedding and a method for using the same are provided. By adding modified chlorinated butyl rubber, the high-temperature resistance of the first airbag and the second airbag is improved, thereby facilitating frequent inflation and deflation. At the same time, the first airbag and the second airbag have good mechanical properties, so their shapes are not prone to change.

The present invention adopts the following technical solutions:
According to one aspect of the present invention, an intelligent pressure-sensitive adjustable bedding is provided, and the intelligent pressure-sensitive adjustable bedding includes: a main frame, a mattress and an air pump installed inside the main frame, wherein the mattress is provided with a first pressure-sensitive adjustment region and a second pressure-sensitive adjustment region, the first pressure-sensitive adjustment region is located in the middle of the mattress, and the second pressure-sensitive adjustment region is symmetrically distributed at head and tail ends of the mattress;
a number of first airbags are arranged in the first pressure-sensitive adjustment region, a number of second airbags are arranged in the second pressure-sensitive adjustment region; both the first airbags and the second airbags are made of high-temperature-resistant materials, a first sensing portion is arranged around each first airbag, and a second sensing portion is arranged around each second airbag, and the first sensing portion and the second sensing portion are respectively connected to the air pump through electromagnetic valves.

Optionally, both the first airbag and the second airbag are composed of the following components in parts by weight: 80-100 parts of first rubber, 5-18 parts of second rubber, 50-70 parts of carbon black, 6-8 parts of vulcanizing agent, and 2-4 parts of vulcanization accelerator;
wherein the first rubber is modified chlorinated butyl rubber, and the second rubber is butyl rubber and/or ethylene propylene rubber.

Optionally, the vulcanizing agent is sulfur and magnesium oxide;
the vulcanization accelerator is a combination of two or three of accelerator TMTD, accelerator TMTM, accelerator CZ, and accelerator DM.

Optionally, the method for preparing the modified chlorinated butyl rubber includes the following steps: plasticizing chlorinated butyl rubber for 3-5 minutes, adding mica and a sensitizer, mixing uniformly to obtain a mixed rubber compound, and after standing for 12-24 hours, performing radiation vulcanization on the mixed rubber compound through γ-rays to obtain the modified chlorinated butyl rubber.
Optionally, the addition amount of the mica is 10-30 wt% of the chlorinated butyl rubber;
the sensitizer is methacrylate, triethylene glycol dimethacrylate, or trimethylolpropane trimethacrylate, and its addition amount is 6-12 wt% of the chlorinated butyl rubber; and
the radiation rate is 2-3 kGy/h, and the radiation dose is 20-60 kGy.

Optionally, the method for preparing both the first airbag and the second airbag includes the following steps:
(1) adding the first rubber, the second rubber, the carbon black, the vulcanizing agent, and the vulcanization accelerator into an internal mixer, mixing at 60-90°C for 1.5-3 hours, then raising the temperature to 130-160°C and vacuumizing, and continuing to mix for 1-2.5 hours to obtain a pre-mixed rubber;
(2) placing the pre-mixed rubber obtained in step (1) into a two-roll mill, adding the remaining carbon black, performing knife cuttings for 2-4 times on each of the left and right sides, finally rolling up for 4-8 times, after uniform mixing, sheeting off the compound and standing for 12-24 hours to obtain a mixed rubber; and
(3) injecting the mixed rubber obtained in step (2) into a first airbag mold and a second airbag mold that have been heated up to 150-200°C through an injection molding machine respectively, vulcanizing at 4-8 MPa for 5-15 minutes to obtain a first airbag product and a second airbag product, then placing the first airbag product and the second airbag product in a vacuum drying oven and vulcanizing at 120-180°C for 0.8-1.5 hours to obtain the first airbag and the second airbag.

Optionally, a control portion is arranged on the side of the mattress close to the air pump, and the control portion is respectively connected to the first sensing portion and the second sensing portion.

According to another aspect of the present invention, a method for using the intelligent pressure-sensitive adjustable bedding is provided, including the following steps:
controlling, by the control portion, the air pump to inflate or deflate the first airbag and the second airbag respectively based on a preset inflation volume-pressure control strategy when the pressure detected by the first sensing portion and the second sensing portion is higher than a pressure threshold, such that the first airbag and the second airbag reach preset heights.

Optionally, the preset inflation volume-pressure control strategy specifically includes the following steps:
S1: controlling the air pump to start inflation or deflation, detecting the pressure values of the first airbag and the second airbag, and controlling the air pump to stop inflation or deflation when the pressure values of the first airbag and the second airbag reach preset pressure values;
S2: monitoring the pressure values of the first airbag and the second airbag, and controlling the air pump to start inflation or deflation when the pressure values of the first airbag and the second airbag reach or fall below the pressure threshold, until the first airbag and the second airbag return to their original heights; and
S3: stopping executing the preset inflation volume-pressure control strategy when all the first airbags and all the second airbags return to their original heights.

Optionally, the control portion controls inflation or deflation through a user mobile terminal connected via a wireless network, and the wireless network is Wi-Fi or Bluetooth.

Optionally, different adjustment gears are set according to different weight ranges borne by the first airbag and the second airbag; different adjustment gears correspond to different inflation volumes or deflation volumes of the first airbag and the second airbag; and the corresponding adjustment gear is determined according to the weight range to which the weight of the human body belongs.

Optionally, the position of each body part of the user is determined according to the posture of the user, so as to divide the pressure-bearing region into a trunk region, a left upper limb region, a right upper limb region, a left lower limb region, and a right lower limb region; a minimum value and a maximum value of the element value in each region are respectively obtained, and an average value is calculated to obtain the pressure equilibrium value corresponding to each region.

Optionally, within the pressure-bearing region, the first airbag or the second airbag corresponding to the elements with values greater than the pressure equilibrium value is slowly deflated, and the first airbag or the second airbag corresponding to the elements with values less than the pressure equilibrium value is slowly inflated; the pressure values borne by each airbag during the inflation or deflation process are monitored in real time, and the real-time gas volume variation is recorded; when the error between the pressure values borne by the first airbag and the second airbag and their corresponding pressure equilibrium values respectively falls within the allowable error range, the inflation or deflation process is stopped.

The beneficial effects of the present invention include but are not limited to:
1. As to the intelligent pressure-sensitive adjustable bedding of the present invention, an electromagnetic valve and an air pump are controlled to inflate or deflate the first airbag and the second airbag, and pressure data in the first airbag and the second airbag are obtained through the first sensing portion and the second sensing portion, therefore, the structure is compact, reasonable and modularized, and the intellectualization of the mattress is realized. By adding modified chlorinated butyl rubber, the high-temperature resistance of the first airbag and the second airbag is improved, thereby facilitating frequent inflation and deflation. At the same time, the first airbag and the second airbag have good mechanical properties and are not prone to shape deformation, and the service life of the two is prolonged.
2. In the intelligent pressure-sensitive adjustable bedding of the present invention, after modifying chlorinated butyl rubber with mica, the damping temperature range is expanded while moving to high temperatures, thereby further improving the hot air aging resistance of the first airbag and the second airbag. In addition, butyl rubber and/or ethylene propylene rubber can improve the calendering performance during processing. Carbon black ensures that the rubber compound has good tensile performance, wear resistance and elasticity. The composite vulcanization system of sulfur and magnesium oxide improves the vulcanization rate and crosslinking activity. The prepared first airbag and second airbag show no signs of cracking or air leakage and possess intact performance, and there is no obvious aging, cracking or deformation, thereby meeting the operating requirements.
3. In the intelligent pressure-sensitive adjustable bedding of the present invention, mica has good dispersibility in chlorinated butyl rubber. Meanwhile, mica can adsorb more molecular chains of chlorinated butyl rubber, to increase the interaction between the two. Radiation vulcanization enables the crosslinking of rubber macromolecules at room temperature, restricts the agglomeration of mica, and does not require the use of vulcanizing agents or vulcanization accelerators, making it particularly suitable for producing products with high safety. The addition of sensitizers greatly reduces the radiation dose and improves the mechanical properties of chlorinated butyl rubber.
4. In the intelligent pressure-sensitive adjustable bedding of the present invention, carbon black is added in batches in steps (1) and (2) to achieve good dispersion performance. At the same time, the mixing temperature is controlled within an appropriate range to prevent scorching and blooming of the rubber compound. The two vulcanization processes in step (3) can make each component fully crosslinked, remove small molecular substances remaining in the matrix after the vulcanizing agents are decomposed, and stabilize and improve the performance of the first airbag and the second airbag. This method is simple, feasible, safe and reliable, and is easy to realize industrial production.
5. As to the intelligent pressure-sensitive adjustable bedding of the present invention, the first sensing portion and the second sensing portion are controlled through the control portion to detect the pressure of the first airbag and the second airbag respectively, and the pressure is transmitted to the control portion. Then, based on the preset inflation volume-pressure control strategy, the control portion controls the air pump to inflate or deflate the first airbag and the second airbag, such that the first airbag and the second airbag reach preset heights. This ensures that all the parts of the body receive an appropriate supporting force, thereby helping to relieve fatigue, relax the body, improve the comfort of the bedding, and enhance the user experience.

### BRIEF DESCRIPTION OF THE DRAWINGS

The accompanying drawings described herein are provided to further illustrate the present invention and form a part of the present invention. The exemplary examples of the present invention and their descriptions are provided to explain the present invention and do not constitute an undue limitation to the present invention. In the drawings:
Fig. 1 is a structural schematic diagram of the intelligent pressure-sensitive adjustable bedding involved in the example of the present invention;
Fig. 2 is a working principle diagram of the first airbag involved in the example of the present invention;
Fig. 3 is a working principle diagram of the second airbag involved in the example of the present invention;
Fig. 4 is a flow diagram of the preset inflation volume-pressure control strategy involved in the example of the present invention.

### Reference numerals:

1. main frame, 2. mattress, 3. air pump, 4. first pressure-sensitive adjustment region, 5. second pressure-sensitive adjustment region, 6. first airbag, 7. second airbag, 8. first sensing portion, 9. second sensing portion, 10. electromagnetic valve, 11. control portion.

### DETAILED DESCRIPTION OF THE EMBODIMENTS

The endpoints of the ranges and any value disclosed in this text are not limited to the exact ranges or values. These ranges or values should be understood to include values close to these ranges or values. For numerical ranges, the endpoint values of each range, the endpoint values of each range and individual point values, and individual point values can be combined with each other to obtain one or more new numerical ranges, and these numerical ranges should be considered as specifically disclosed in this text.

For those examples where specific conditions are not specified, the operations shall be performed in accordance with conventional conditions or the conditions recommended by the manufacturer. All the raw materials or instruments whose manufacturers are not indicated are conventional products that can be purchased from the market.

### Example 1

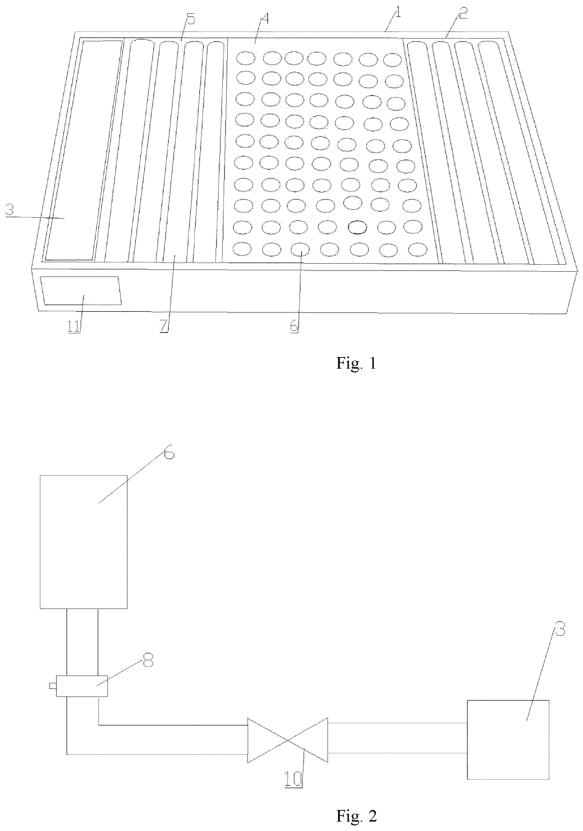

With reference to Figs. 1-3, this example provides an intelligent pressure-sensitive adjustable bedding, and the intelligent pressure-sensitive adjustable bedding includes a main frame 1, a mattress 2 and an air pump 3 installed inside the main frame 1, wherein the mattress 2 is provided with a first pressure-sensitive adjustment region 4 and a second pressure-sensitive adjustment region 5, the first pressure-sensitive adjustment region 4 is located in the middle of the mattress 2, and the second pressure-sensitive adjustment region 5 is symmetrically distributed at head and tail ends of the mattress 2. The structure is compact, reasonable and modularized, and is conducive to realizing intellectualization of the mattress 2.

A number of first airbags 6 are arranged in the first pressure-sensitive adjustment region 4, a number of second airbags 7 are arranged in the second pressure-sensitive adjustment region 5; both the first airbags 6 and the second airbags 7 are made of high-temperature-resistant materials, facilitating frequent inflation and deflation; a first sensing portion 8 is arranged around each first airbag 6, the second sensing portion 9 is arranged around each second airbag 7, and the first sensing portion 8 and the second sensing portion 9 are respectively connected to the air pump 3 through electromagnetic valves 10, such that the air pump 3 easily inflates or deflates the first airbags 6 and the second airbags 7.

Further, the first airbags 6 are arranged in a matrix pattern, and the second airbags 7 are equally spaced along the length direction of the mattress 2, thereby facilitating adaptation to the curves of the human body, reducing fatigue, and effectively enhancing the comfort of the bedding.

Specifically, one first airbag 6 is connected to one first sensing portion 8, one electromagnetic valve 10 and one air pump 3 in sequence, and one second airbag 7 is connected to one second sensing portion 9, one electromagnetic valve 10 and one air pump 3 in sequence. This facilitates independent adjustment of the height of each first airbag 6 and each second airbag 7, such that all the parts of the human body can receive an appropriate supporting force.

It can be understood that the air pump 3 can be an inflation/deflation air pump 3, that is, an air pump 3 with inflation and deflation functions, and the air pump 3 provides power for the first airbag 6 and the second airbag 7, and realizes inflation and deflation functions in combination with the electromagnetic valves 10.

It can be understood that the first sensing portion 8 and the second sensing portion 9 can be a first air pressure sensor and a second air pressure sensor respectively, and are configured to detect the pressure inside the first airbag 6 and the second airbag 7 respectively, so as to realize intelligent control of the mattress 2.

Further, a control portion 11 is arranged on the side of the mattress 2 close to the air pump 3; and the control portion 11 is connected to the first sensing portion 8 and the second sensing portion 9 respectively, and is configured to obtain the pressure data of the first airbag 6 and the second airbag 7.

Further, the position of each body part of the user is determined according to the posture of the user, so as to divide the pressure-bearing region into a trunk region, a left upper limb region, a right upper limb region, a left lower limb region, and a right lower limb region; the minimum value and the maximum value of the element value in each region are respectively obtained, and an average value is calculated to obtain the pressure equilibrium value corresponding to each region.

Specifically, within the pressure-bearing region, the first airbag or the second airbag corresponding to the elements with values greater than the pressure equilibrium value is slowly deflated, and the first airbag or the second airbag corresponding to the elements with values less than the pressure equilibrium value is slowly inflated; the pressure value borne by each airbag during the inflation or deflation process is monitored in real time, and the real-time gas volume variation is recorded; when the error between the pressure values borne by the first airbag and the second airbag and their corresponding pressure equilibrium values respectively falls within the allowable error range, the inflation or deflation process is stopped.

Further, a method for using the intelligent pressure-sensitive adjustable bedding is provided, and includes the following steps:
controlling, by the control portion 11, the first sensing portion 8 and the second sensing portion 9 to detect the pressures of the first airbag 6 and the second airbag 7 respectively; when the pressure is higher than the pressure threshold, controlling the air pump 3 to inflate or deflate the first airbag 6 and the second airbag 7 based on a preset inflation volume-pressure control strategy, such that the first airbag 6 and the second airbag 7 reach preset heights, thereby ensuring that all the parts of the body receive an appropriate supporting force, and helping to relax the body and enhance user experience.

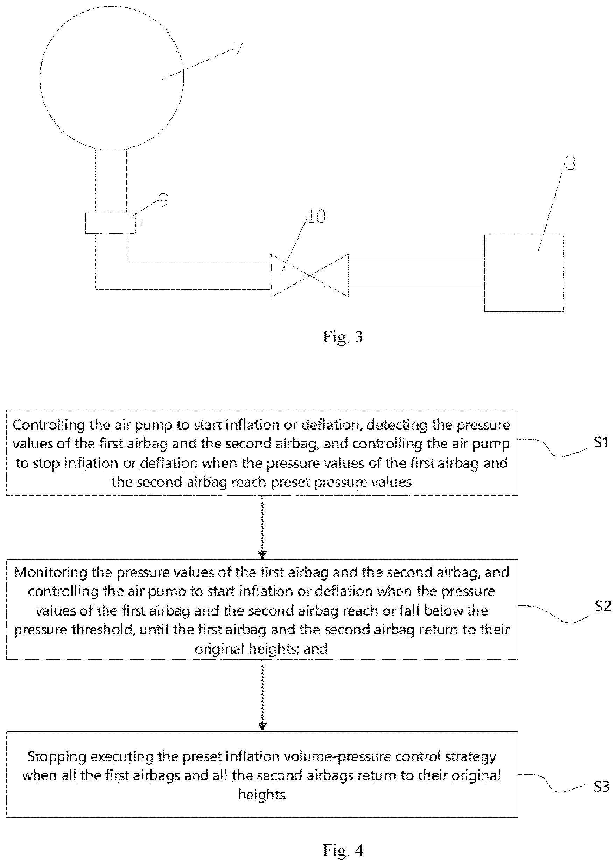

Further, with reference to Fig. 4, the preset inflation volume-pressure control strategy specifically includes the following steps:
S1: controlling the air pump 3 to start inflation or deflation, detecting the pressure values of the first airbag 6 and the second airbag 7, and controlling the air pump 3 to stop inflation or deflation when the pressure values of the first airbag 6 and the second airbag 7 reach preset pressure values;
specifically, the usage postures of the user include a sitting posture, lying on the back and lying on the side. The control portion 11 determines the pressure ranges borne by the first airbag 6 and the second airbag 7 according to the usage state of the user, and then sets different adjustment gears. Different adjustment gears correspond to different inflation volumes or deflation volumes of the first airbag 6 and the second airbag 7;
S2: monitoring the pressure values of the first airbag 6 and the second airbag 7, and controlling the air pump 3 to start inflation or deflation when the pressure values of the first airbag 6 and the second airbag 7 reach or fall below the pressure threshold, until the first airbag 6 and the second airbag 7 return to their original heights;
specifically, the inflation volume or deflation volume required for the first airbag 6 and the second airbag 7 to return to their original heights is the same as the deflation volume or inflation volume used last time;
S3: stopping executing the preset inflation volume-pressure control strategy when all the first airbags 6 and all the second airbags 7 return to their original heights.

Specifically, when all the first airbags 6 and all the second airbags 7 return to their original heights, it indicates that the mattress 2 is in an unused state, and at this time, the preset inflation volume-pressure control strategy stops automatically.

Further, the control portion 11 controls inflation or deflation through a user mobile terminal connected via a wireless network, and the wireless network is Wi-Fi or Bluetooth. Specifically, the operating parameters of the mattress 2 (such as inflation volume, deflation volume, etc.) can be configured through a mobile phone, and the operation of the mattress 2 can also be controlled via a mobile phone.

### Example 2

This example provides an intelligent pressure-sensitive adjustable bedding, its specific structure has been elaborated in Example 1 and will not be repeated in this example. The method for preparing both the first airbag and the second airbag includes the following steps:
(1) adding 80 parts by weight of modified chlorinated butyl rubber, 5 parts by weight of butyl rubber, 25 parts by weight of carbon black, 3 parts by weight of sulfur, 3 parts by weight of magnesium oxide, 1 part by weight of accelerator TMTD, and 1 part by weight of accelerator TMTM into an internal mixer, mixing at 60°C for 3 hours, then raising the temperature to 130°C and vacuumizing, and continuing to mix for 2.5 hours to obtain a pre-mixed rubber;
(2) placing the pre-mixed rubber obtained in step (1) into a two-roll mill, adding 25 parts by weight of carbon black, performing knife cuttings twice on each of the left and right sides, rolling up for eight times, after uniform mixing, sheeting off the compound and standing for 12 hours to obtain a mixed rubber; and
(3) injecting the mixed rubber obtained in step (2) into a first airbag mold and a second airbag mold that have been heated up to 150°C through an injection molding machine respectively, vulcanizing at 4 MPa for 15 minutes to obtain a first airbag product and a second airbag product, then placing the first airbag product and the second airbag product in a vacuum drying oven and vulcanizing at 120°C for 1.5 hours to obtain the first airbag and the second airbag.

The method for preparing the modified chlorinated butyl rubber includes the following steps: plasticizing chlorinated butyl rubber for 3 minutes, adding mica (accounting for 10 wt% of the chlorinated butyl rubber) and methacrylate (accounting for 6 wt% of the chlorinated butyl rubber), and mixing uniformly to obtain a mixed rubber compound, and after standing for 12 hours, performing radiation vulcanization on the mixed rubber compound through γ-rays at a radiation rate of 2 kGy/h and a radiation dose of 20 kGy to obtain the modified chlorinated butyl rubber.

### Example 3

This example provides an intelligent pressure-sensitive adjustable bedding, its specific structure has been elaborated in Example 1 and will not be repeated in this example. The method for preparing both the first airbag and the second airbag includes the following steps:
(1) adding 85 parts by weight of modified chlorinated butyl rubber, 10 parts by weight of ethylene propylene rubber, 30 parts by weight of carbon black, 3 parts by weight of sulfur, 3 parts by weight of magnesium oxide, 1 part by weight of accelerator TMTD, and 1 part by weight of accelerator DM into an internal mixer, mixing at 70°C for 2.6 hours, then raising the temperature to 140°C and vacuumizing, and continuing to mix for 2 hours to obtain a pre-mixed rubber;
(2) placing the pre-mixed rubber obtained in step (1) into a two-roll mill, adding 25 parts by weight of carbon black, performing knife cuttings twice on each of the left and right sides, finally rolling up for seven times, after uniform mixing, sheeting off the compound and standing for 20 hours to obtain a mixed rubber; and
(3) injecting the mixed rubber obtained in step (2) into a first airbag mold and a second airbag mold that have been heated up to 170°C through an injection molding machine respectively, vulcanizing at 5 MPa for 12 minutes to obtain a first airbag product and a second airbag product, then placing the first airbag product and the second airbag product in a vacuum drying oven and vulcanizing at 135°C for 1.2 hours to obtain the first airbag and the second airbag.

The method for preparing the modified chlorinated butyl rubber includes the following steps: plasticizing chlorinated butyl rubber for 3 minutes, adding mica (accounting for 15 wt% of the chlorinated butyl rubber) and triethylene glycol dimethacrylate (accounting for 8 wt% of the chlorinated butyl rubber), and mixing uniformly to obtain a mixed rubber compound, and after standing for 15 hours, performing radiation vulcanization on the mixed rubber compound through γ-rays at a radiation rate of 2 kGy/h and a radiation dose of 30 kGy to obtain the modified chlorinated butyl rubber.

### Example 4

This example provides an intelligent pressure-sensitive adjustable bedding, its specific structure has been elaborated in Example 1 and will not be repeated in this example. The method for preparing both the first airbag and the second airbag includes the following steps:
(1) adding 90 parts by weight of modified chlorinated butyl rubber, 6 parts by weight of butyl rubber, 6 parts by weight of ethylene propylene rubber, 30 parts by weight of carbon black, 3 parts by weight of sulfur, 4 parts by weight of magnesium oxide, 1 part by weight of accelerator TMTD, 1 part by weight of accelerator TMTM, and 1 part by weight of accelerator DM into an internal mixer, mixing at 75°C for 2.2 hours, then raising the temperature to 145°C and vacuumizing, and continuing to mix for 1.8 hours to obtain a pre-mixed rubber;
(2) placing the pre-mixed rubber obtained in step (1) into a two-roll mill, adding 30 parts by weight of carbon black, performing knife cuttings for three times on each of the left and right sides, finally rolling up for six times, after uniform mixing, sheeting off the compound and standing for 18 hours to obtain a mixed rubber; and
(3) injecting the mixed rubber obtained in step (2) into the first airbag mold and the second airbag mold that have been heated up to 175°C through an injection molding machine respectively, vulcanizing at 6 MPa for 10 minutes to obtain a first airbag product and a second airbag product, then placing the first airbag product and the second airbag product in a vacuum drying oven and vulcanizing at 150°C for 1 hour to obtain the first airbag and the second airbag.

The method for preparing the modified chlorinated butyl rubber includes the following steps: plasticizing chlorinated butyl rubber for 4 minutes, adding mica (accounting for 20 wt% of the chlorinated butyl rubber) and triethylene glycol dimethacrylate (accounting for 9 wt% of the chlorinated butyl rubber), and mixing uniformly to obtain a mixed rubber compound, and after standing for 18 hours, performing radiation vulcanization on the mixed rubber compound through γ-rays at a radiation rate of 2.5 kGy/h and a radiation dose of 40 kGy to obtain the modified chlorinated butyl rubber.

### Example 5

This example provides an intelligent pressure-sensitive adjustable bedding, its specific structure has been elaborated in Example 1 and will not be repeated in this example. The method for preparing both the first airbag and the second airbag includes the following steps:
(1) adding 95 parts by weight of modified chlorinated butyl rubber, 15 parts by weight of butyl rubber, 35 parts by weight of carbon black, 4 parts by weight of sulfur, 4 parts by weight of magnesium oxide, 2 parts by weight of accelerator TMTM, and 2 parts by weight of accelerator CZ into an internal mixer, mixing at 80°C for 2 hours, then raising the temperature to 150°C and vacuumizing, and continuing to mix for 1.5 hours to obtain a pre-mixed rubber;
(2) placing the pre-mixed rubber obtained in step (1) into a two-roll mill, adding 30 parts by weight of carbon black, performing knife cuttings for four times on each of the left and right sides, finally rolling up for five times, after uniform mixing, sheeting off the compound and standing for 15 hours to obtain a mixed rubber; and
(3) injecting the mixed rubber obtained in step (2) into the first airbag mold and the second airbag mold that have been heated up to 180°C through an injection molding machine respectively, vulcanizing at 7 MPa for 8 minutes to obtain a first airbag product and a second airbag product, then placing the first airbag product and the second airbag product in a vacuum drying oven and vulcanizing at 165°C for 1 hour to obtain the first airbag and the second airbag.

The method for preparing the modified chlorinated butyl rubber includes the following steps: plasticizing chlorinated butyl rubber for 5 minutes, adding mica (accounting for 25 wt% of the chlorinated butyl rubber) and methacrylate (accounting for 10 wt% of the chlorinated butyl rubber), and mixing uniformly to obtain a mixed rubber compound, and after standing for 20 hours, performing radiation vulcanization on the mixed rubber compound through γ-rays at a radiation rate of 3 kGy/h and a radiation dose of 50 kGy to obtain the modified chlorinated butyl rubber.

### Example 6

This example provides an intelligent pressure-sensitive adjustable bedding, its specific structure has been elaborated in Example 1 and will not be repeated in this example. The method for preparing both the first airbag and the second airbag includes the following steps:
(1) adding 100 parts by weight of modified chlorinated butyl rubber, 18 parts by weight of ethylene propylene rubber, 35 parts by weight of carbon black, 4 parts by weight of sulfur, 4 parts by weight of magnesium oxide, 2 parts by weight of accelerator CZ, and 2 parts by weight of accelerator DM into an internal mixer, mixing at 90°C for 1.5 hours, then raising the temperature to 160°C and vacuumizing, and continuing to mix for 1 hour to obtain a pre-mixed rubber;
(2) placing the pre-mixed rubber obtained in step (1) into a two-roll mill, adding 35 parts by weight of carbon black, performing knife cuttings for four times on each of the left and right sides, finally rolling up for four times, after uniform mixing, sheeting off the compound and standing for 24 hours to obtain a mixed rubber; and
(3) injecting the mixed rubber obtained in step (2) into the first airbag mold and the second airbag mold that have been heated up to 200°C through an injection molding machine respectively, vulcanizing at 8 MPa for 5 minutes to obtain a first airbag product and a second airbag product, then placing the first airbag product and the second airbag product in a vacuum drying oven and vulcanizing at 180°C for 0.8 hour to obtain the first airbag and the second airbag.

The method for preparing the modified chlorinated butyl rubber includes the following steps: plasticizing chlorinated butyl rubber for 5 minutes, adding mica (accounting for 30 wt% of the chlorinated butyl rubber) and trimethylolpropane trimethacrylate (accounting for 12 wt% of the chlorinated butyl rubber), and mixing uniformly to obtain a mixed rubber compound, and after standing for 24 hours, performing radiation vulcanization on the mixed rubber compound through γ-rays at a radiation rate of 3 kGy/h and a radiation dose of 60 kGy to obtain the modified chlorinated butyl rubber.

### Comparative Example 1

Comparative Example 1 differs from Example 4 in that the modified chlorinated butyl rubber is replaced with chlorinated butyl rubber.

### Comparative Example 2

Comparative Example 2 differs from Example 4 in that mica is replaced with montmorillonite.

### Comparative Example 3

Comparative Example 3 differs from Example 4 in that in the method for preparing the modified chlorinated butyl rubber, radiation vulcanization is performed on the mixed rubber compound by electron irradiation, with a radiation rate of 0.5 kGy/h and a radiation dose of 100 kGy.

### Comparative Example 4

Comparative Example 4 differs from Example 4 in that the method for preparing the modified chlorinated butyl rubber includes the following steps: plasticizing chlorinated butyl rubber for 4 minutes, adding mica (accounting for 20 wt% of chlorinated butyl rubber) and triethylene glycol dimethacrylate (accounting for 9 wt% of chlorinated butyl rubber), mixing uniformly to obtain a mixed rubber compound, after standing for 18 hours, vulcanizing the mixed rubber compound at 165°C and 10 MPa for 30 minutes to obtain the modified chlorinated butyl rubber.

### Comparative Example 5

Comparative Example 5 differs from Example 4 in that triethylene glycol dimethacrylate is replaced with triallyl isocyanurate.

### Comparative Example 6

Comparative Example 6 differs from Example 4 in that magnesium oxide in step (1) is replaced with zinc oxide.

### Comparative Example 7

Comparative Example 7 differs from Example 4 in that in step (3), the mixed rubber obtained in step (2) is respectively injected into the first airbag mold and the second airbag mold that have been heated up to 175°C through an injection molding machine, and is vulcanized at 6 MPa for 10 minutes to obtain the first airbag and the second airbag.

### Test Example

### Methods for testing performance of the first airbag and the second airbag:

1. Hardness test: in accordance with the national standard GB/T 531.1-2008, a hardness tester was used for the test at room temperature;
2. Tensile strength and elongation at break performance test: in accordance with the national standard GB/T 528-2009, an electronic tensile testing machine was used for test at a tensile speed of 500 mm/min and a test temperature of 23±2°C, and the sample is a type-2 dumbbell-shaped sample;
3. Compression set test: in accordance with the national standard GB/T 7759-1996, a compression set device was used for the test, a type-B sample was used at a compression amount of 25% and a test temperature of 70°C for 24 hours;
4. Hot air accelerated aging test: in accordance with the national standard GB/T 3512-2001, the test was performed in a heat aging test chamber under test conditions of 150°C×72 h.

The test results are shown in Table 1 and Table 2, wherein Table 1 shows the initial performance of the samples, and Table 2 shows the performance of the samples after aging.

**Table 1**

| Samples | Hardness | Compression permanent deformation rate /% | Tensile strength/MPa | Elongation at break/% |
|---|---|---|---|---|
| Example 2 | 47 | 12 | 21 | 511 |
| Example 3 | 44 | 10 | 23 | 526 |
| Example 4 | 46 | 8 | 25 | 535 |
| Example 5 | 45 | 11 | 20 | 518 |
| Example 6 | 48 | 9 | 22 | 524 |
| Comparative Example 1 | 42 | 22 | 9.7 | 385 |
| Comparative Example 2 | 45 | 16 | 15.2 | 437 |
| Comparative Example 3 | 48 | 18 | 12.6 | 413 |
| Comparative Example 4 | 43 | 20 | 10.3 | 396 |
| Comparative Example 5 | 44 | 14 | 17.2 | 452 |
| Comparative Example 6 | 47 | 17 | 13.8 | 425 |
| Comparative Example 7 | 48 | 21 | 10 | 391 |

**Table 2**

| Samples | Hardness | Tensile strength retention rate /% | Elongation at break retention rate /% |
|---|---|---|---|
| Example 2 | 45 | 102 | 94 |
| Example 3 | 43 | 104 | 92 |
| Example 4 | 46 | 106 | 97 |
| Example 5 | 44 | 103 | 95 |
| Example 6 | 47 | 105 | 93 |
| Comparative Example 1 | 40 | 78 | 65 |
| Comparative Example 2 | 44 | 89 | 80 |
| Comparative Example 3 | 46 | 84 | 73 |
| Comparative Example 4 | 42 | 80 | 69 |
| Comparative Example 5 | 43 | 91 | 82 |
| Comparative Example 6 | 46 | 86 | 75 |
| Comparative Example 7 | 45 | 79 | 67 |

It can be seen from the test results in Table 1 and Table 2 before and after aging that the first airbag and the second airbag prepared by the present invention have better resistance to hot air aging, thereby facilitating frequent inflation and deflation. At the same time, the first airbag and the second airbag also have good mechanical properties, are not easy to change in shape, and have correspondingly prolonged service life.

The above description is merely examples of the present invention, and the protection scope of the present invention is not limited by these specific examples, but is determined by the claims of the present invention. For those skilled in the art, various modifications and changes can be made to the present invention. Any modifications, equivalent substitutions, improvements and the like made within the technical ideas and principles of the present invention should be included within the protection scope of the present invention.

## Claims

1. An intelligent pressure-sensitive adjustable bedding, comprising a main frame, a mattress and an air pump installed inside the main frame, wherein the mattress is provided with a first pressure-sensitive adjustment region and a second pressure-sensitive adjustment region, the first pressure-sensitive adjustment region is located in the middle of the mattress, and the second pressure-sensitive adjustment region is symmetrically distributed at head and tail ends of the mattress; and
a number of first airbags are arranged in the first pressure-sensitive adjustment region, a number of second airbags are arranged in the second pressure-sensitive adjustment region; both the first airbags and the second airbags are made of high-temperature-resistant materials, a first sensing portion is arranged around each first airbag, and a second sensing portion is arranged around each second airbag, and the first sensing portion and the second sensing portion are respectively connected to the air pump through electromagnetic valves.

2. The intelligent pressure-sensitive adjustable bedding according to claim 1, wherein both the first airbag and the second airbag are composed of the following components in parts by weight: 80-100 parts of first rubber, 5-18 parts of second rubber, 50-70 parts of carbon black, 6-8 parts of vulcanizing agent, and 2-4 parts of vulcanization accelerator;
wherein, the first rubber is modified chlorinated butyl rubber, and the second rubber is butyl rubber and/or ethylene propylene rubber.

3. The intelligent pressure-sensitive adjustable bedding according to claim 2, wherein the vulcanizing agent is sulfur and magnesium oxide;
the vulcanization accelerator is a combination of two or three of accelerator TMTD, accelerator TMTM, accelerator CZ, and accelerator DM.

4. The intelligent pressure-sensitive adjustable bedding according to claim 2, wherein the method for preparing the modified chlorinated butyl rubber comprises the following steps: plasticizing chlorinated butyl rubber for 3-5 minutes, adding mica and a sensitizer, mixing uniformly to obtain a mixed rubber compound, standing for 12-24 hours, and then performing radiation vulcanization on the mixed rubber compound through γ-rays to obtain the modified chlorinated butyl rubber.

5. The intelligent pressure-sensitive adjustable bedding according to claim 4, wherein the addition amount of the mica is 10-30 wt% of the chlorinated butyl rubber;
the sensitizer is methacrylate, triethylene glycol dimethacrylate, or trimethylolpropane trimethacrylate, and its addition amount is 6-12 wt% of the chlorinated butyl rubber; and
the radiation rate is 2-3 kGy/h, and the radiation dose is 20-60 kGy.

6. The intelligent pressure-sensitive adjustable bedding according to claim 2, wherein the method for preparing both the first airbag and the second airbag comprises the following steps:
(1) adding the first rubber, the second rubber, the carbon black, the vulcanizing agent, and the vulcanization accelerator into an internal mixer, mixing at 60-90°C for 1.5-3 hours, then raising the temperature to 130-160°C and vacuumizing, and continuing to mix for 1-2.5 hours to obtain a pre-mixed rubber;
(2) placing the pre-mixed rubber obtained in step (1) into a two-roll mill, adding the remaining carbon black, performing knife cuttings for 2-4 times on each of the left and right sides, finally rolling up for 4-8 times, after uniform mixing, sheeting off the compound and standing for 12-24 hours to obtain a mixed rubber; and
(3) injecting the mixed rubber obtained in step (2) into a first airbag mold and a second airbag mold that have been heated up to 150-200°C through an injection molding machine respectively, vulcanizing at 4-8 MPa for 5-15 minutes to obtain a first airbag product and a second airbag product, then placing the first airbag product and the second airbag product in a vacuum drying oven and vulcanizing at 120-180°C for 0.8-1.5 hours to obtain the first airbag and the second airbag.

7. The intelligent pressure-sensitive adjustable bedding according to claim 1, wherein a control portion is arranged on the side of the mattress close to the air pump, and the control portion is respectively connected to the first sensing portion and the second sensing portion.

8. The method for using the intelligent pressure-sensitive adjustable bedding according to claim 7, comprising the following steps:
controlling, by the control portion, the air pump to inflate or deflate the first airbag and the second airbag respectively based on a preset inflation volume-pressure control strategy when the pressure detected by the first sensing portion and the second sensing portion is higher than a pressure threshold, such that the first airbag and the second airbag reach preset heights.

9. The method for using the intelligent pressure-sensitive adjustable bedding according to claim 8, wherein the preset inflation volume-pressure control strategy specifically comprises the following steps:
S1: controlling the air pump to start inflation or deflation, detecting the pressure values of the first airbag and the second airbag, and controlling the air pump to stop inflation or deflation when the pressure values of the first airbag and the second airbag reach preset pressure values;
S2: monitoring the pressure values of the first airbag and the second airbag, and controlling the air pump to start inflation or deflation when the pressure values of the first airbag and the second airbag reach or fall below the pressure threshold, until the first airbag and the second airbag return to their original heights; and
S3: stopping executing the preset inflation volume-pressure control strategy when all the first airbags and all the second airbags return to their original heights.

10. The method for using the intelligent pressure-sensitive adjustable bedding according to claim 9, wherein the control portion controls inflation or deflation through a user mobile terminal connected via a wireless network, and the wireless network is Wi-Fi or Bluetooth.
